(19) Europäisches Patentamt
European Patent Office
Office européen des brevets

(11) **EP 4 165 456 B1**

(12) **EUROPÄISCHE PATENTSCHRIFT**

(45) Veröffentlichungstag und Bekanntmachung des Hinweises auf die Patenterteilung:
**30.07.2025 Patentblatt 2025/31**

(21) Anmeldenummer: **21733919.1**

(22) Anmeldetag: **11.06.2021**

(51) Internationale Patentklassifikation (IPC):
**G06F 3/04847** *(2022.01)* **G02B 21/36** *(2006.01)*
**G02B 21/00** *(2006.01)* **G06F 3/0488** *(2022.01)*

(52) Gemeinsame Patentklassifikation (CPC):
**G02B 21/368; G02B 21/0032; G02B 21/0056; G02B 21/006; G06F 3/04847; G06F 3/0488**

(86) Internationale Anmeldenummer:
**PCT/EP2021/065854**

(87) Internationale Veröffentlichungsnummer:
**WO 2021/250262 (16.12.2021 Gazette 2021/50)**

(54) **VERFAHREN, RECHENEINHEIT UND SYSTEM ZUM BESTIMMEN JEWEILS EINES WERTS FÜR WENIGSTENS DREI EINSTELLPARAMETER MITTELS EINER EINGABEEINHEIT IN FORM EINER GRAPHISCHEN BENUTZER-SCHNITTSTELLE**

METHOD, COMPUTING UNIT AND SYSTEM FOR DETERMINING A VALUE FOR EACH OF AT LEAST THREE SETTING PARAMETERS BY MEANS OF AN INPUT UNIT IN THE FORM OF A GRAPHICAL USER-INTERFACE

PROCÉDÉ, UNITÉ DE CALCUL ET SYSTÈME POUR DÉTERMINER UNE VALEUR POUR CHACUN D'AU MOINS TROIS PARAMÈTRES DE RÉGLAGE AU MOYEN D'UNE UNITÉ D'ENTRÉE SOUS LA FORME D'UNE INTERFACE UTILISATEUR GRAPHIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2020 DE 102020115610**

(43) Veröffentlichungstag der Anmeldung:
**19.04.2023 Patentblatt 2023/16**

(73) Patentinhaber: **Leica Microsystems CMS GmbH**
**35578 Wetzlar (DE)**

(72) Erfinder:
• **PELZER, Patric**
**35578 Wetzlar (DE)**
• **WITTKE, Werner**
**35619 Braunfels (DE)**
• **DIAS, Gabriel Roberto**
**35584 Wetzlar-Naunheim (DE)**
• **KEUL, Oliver**
**35580 Nauborn (DE)**

(74) Vertreter: **Schaumburg und Partner Patentanwälte mbB**
**Mauerkircherstraße 31**
**81679 München (DE)**

(56) Entgegenhaltungen:
**EP-A1- 2 339 388     US-A1- 2014 139 541**
**US-A1- 2020 050 296**

## Beschreibung

Beschreibung

Die vorliegende Erfindung betrifft ein computerimplementiertes Verfahren zum Bestimmen jeweils eines Werts für wenigstens drei Einstellparameter mittels einer Eingabeeinheit in Form einer graphischen Benutzer-Schnittstelle, eine Recheneinheit und ein Computerprogramm zu dessen Durchführung sowie ein System mit einer solchen Recheneinheit.

Stand der Technik

Zur Bedienung von Geräten wie z.B. Mikroskopen können Bedieneinheiten eingesetzt werden, die über eine Vielzahl von Knöpfen, Steuerkreuzen usw. verfügen. Um Gerätefunktionen z.B. einer Kamera, wie z.B. Auflösung, Helligkeit, Kontrast, Weißabgleich, digitales Bild- oder Videoformat (z.B. BMP, TIF, JPG, MPG, AVI etc.), Bild- oder Videokompressionsverfahren usw., zu steuern, ist der Anwender gezwungen, zahlreiche Parameter unintuitiv und ohne Erkennen von gegenseitigen Abhängigkeiten einzustellen.

Aus der DE 10 2010 063 392 A1 ist ein Mikroskopsystem mit einer zur optischen und digitalen Erfassung eines Objekts unter Erzeugung eines Objektbildes eingerichteten Bilderfassungseinrichtung und mit einem zur Anzeige des Objektbildes in einem Anzeigebereich und zur Erfassung von Eingaben in dem Anzeigebereich ausgebildeten Sensorbildschirm bekannt, wobei das Mikroskopsystem zur Veränderung von Einstellungen von motorisierten und/oder elektrisch steuerbaren Mikroskopkomponenten am Mikroskopsystem auf Grundlage der in dem Anzeigebereich des Sensorbildschirms erfassten Eingaben eingerichtet ist.

Aus der nachveröffentlichten DE 10 2018 132 337 A1 geht eine Eingabeeinheit hervor, mittels der durch Positionierung eines Eingabezeigers in einer Eingabefläche wenigstens drei Einstellparameter und davon wenigstens zwei unabhängig voneinander eingestellt werden können.

In der US 2014/139541 A1 wird ein Emulator oder eine Emulation für die digitale Bildverarbeitung eines optischen Mikroskops beschrieben, bei der eine Benutzereingabevorrichtung verwendet wird, um die Emulation eines Betriebs eines optischen Mikroskops in einem digitalen Bildverarbeitungssystem zu unterstützen. Der Emulator oder die Emulation ist über eine im Speicher gespeicherte Bibliothek von Verarbeitungsfunktionen programmierbar. Die Eingabevorrichtung ist angepasst, um Steuersignale basierend auf einer Benutzereingabe zu erzeugen und die Steuersignale an einen Prozessor zu übertragen, wobei der Prozessor angepasst ist, um einen oder mehrere Parameter der Verarbeitungsfunktionen basierend auf den Steuersignalen zu ändern.

In der EP 2 339 388 A1 wird eine Mikroskopsteuerung beschreiben, die eine CPU und ein Berührungsfeld mit ersten und zweiten Erkennungseinheiten umfasst. Die CPU stellt eine Vielzahl von Betriebsbereichen ein, einschließlich mindestens eines ersten Betriebsbereichs im Anzeigebereich des Berührungsfelds. Die zweite Erkennungseinheit erkennt einen Unterschied zwischen der Eingabeanfangsposition, an der die Eingabe zuerst erkannt wird, und der Eingabeendposition, an der die Eingabe zuletzt erkannt wird, nur dann, wenn die erste Erkennungseinheit eine kontinuierliche Eingabe in dem ersten Betriebsbereich erkennt, und wenn eine kontinuierliche Eingabe in den zweiten Betriebsbereich erfolgt, der ein anderer Bereich als der erste Betriebsbereich und ein Bereich im Anzeigebereich des Touchpanels ist. Wenn der Unterschied erkannt wird, erzeugt die CPU ein Steueranweisungssignal zur Steuerung des Antriebs eines entsprechenden elektrischen Antriebsmechanismus auf der Grundlage des Unterschieds.

In der US 2020/050296 A1 wird ein Taststift umfassend ein zylindrisches Gehäuse, einen Spitzenabschnitt, der auf einer Spitzenseite des Gehäuses vorgesehen ist und eine Spitzenelektrode enthält, einen Endabschnitt, der auf einer Endseite des Gehäuses vorgesehen ist und eine Endelektrode enthält, eine in dem Gehäuse vorgesehene Leistungsschaltung, eine erste Übertragungsschaltung, die im Betrieb Leistung von der Leistungsschaltung empfängt und ein erstes Abwärtssignal erzeugt, das durch die Spitzenelektrode zur Außenseite des Gehäuses übertragen wird, eine zweite Übertragungsschaltung, die im Betrieb Leistung von der Leistungsschaltung empfängt und ein zweites Downlink-Signal erzeugt, das durch die End-Elektrode zur Außenseite des Gehäuses übertragen wird, wobei sich das zweite Downlink-Signal von dem ersten Downlink-Signal unterscheidet, und eine Steuerschaltung, die im Betrieb die erste Übertragungsschaltung und die zweite Übertragungsschaltung gemäß einer Vielzahl von Übertragungsmodi steuert, beschrieben.

Offenbarung

Erfindungsgemäß werden ein computerimplementiertes Verfahren zum Bestimmen jeweils eines Werts für wenigstens drei Einstellparameter mittels einer Eingabeeinheit in Form einer graphischen Benutzer-Schnittstelle, eine Recheneinheit und ein Computerprogramm zu dessen Durchführung sowie ein System mit einer solchen Recheneinheit mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung basiert auf der Idee, dass mittels einer Eingabeeinheit in Form einer graphischen Benutzer-Schnittstelle mit einem in einer Eingabefläche positionierbaren Eingabezeiger gleichzeitig wenigstens drei Einstellparameter und davon wenigstens zwei unabhängig voneinander durch Positionieren des Eingabezeigers innerhalb der Eingabefläche eingestellt werden können, wenn ein Wert für jeden der wenigstens drei Einstellparameter in Abhängigkeit von jeweils einem Abstand der Position des Eingabezeigers von wenigstens einem dem jeweiligen Einstellparameter zugeordneten Koordinatenursprung als Koordinate bestimmt wird. Auf diese Weise können aus einer Position in der zweidimensionalen Fläche drei oder mehr Koordinaten gewonnen werden, wenngleich diese - wie sich versteht - nicht alle unabhängig voneinander sind. Die Eingabefläche kann insbesondere auf einer Anzeigeeinheit, wie einem Monitor oder einem Touchscreen, dargestellt werden, wenngleich diese - wie sich versteht - nicht alle unabhängig voneinander sind. Die Eingabefläche kann insbesondere auf einer Anzeigeeinheit, wie einem Monitor oder einem Touchscreen, dargestellt werden, und zum Einstellen jeweils eines Werts für die Einstellparameter wird die Position des Eingabezeigers in der Eingabefläche von einem Anwender vorgegeben, beispielsweise mittels eines Eingabegeräts wie einer Computermaus, einem Touchscreen usw.

Insbesondere kann die Erfindung vorteilhaft in Situationen eingesetzt werden, in denen zwar mehr als zwei Parameter einstellbar sind, zwischen denen jedoch Abhängigkeiten tatsächlich bestehen oder wunschgemäß bestehen sollen, die sich durch Vorgabe von geeigneten Koordinatenursprüngen implementieren lassen.

Solche voneinander wunschgemäß abhängigen Parameter sind zum Beispiel Belichtungszeit und Beleuchtungsintensität bei einer Bildaufnahme von Gewebe. Um Gewebeschädigungen zu vermeiden, sollte die eingebrachte Energie (d.h. Intensität mal Zeit) einen Schwellwert möglichst nicht übersteigen. Für einen solchen Fall können die Koordinatenursprünge so gelegt werden, dass eine Erhöhung der Intensität automatisch zu einer Reduzierung der Belichtungszeit führt und umgekehrt. Ein weiterer Einstellparameter kann hier beispielsweise noch die Wellenlänge (Farbe) der Beleuchtung sein, die ebenfalls Auswirkungen auf die Schädigung hat. Bekanntermaßen ist kurzwelliges Licht (Blau) schädlicher als langwelliges Licht (Rot). Die Erfindung kann dann beispielsweise dazu genutzt werden, nur unschädliche Kombinationen aus Farbe, Intensität und Zeit auswählbar zu machen.

Vorzugsweise wird jedem der wenigstens drei Einstellparameter ein unterschiedlicher Koordinatenursprung zugeordnet. Auf diese Weise können die Einstellparameter immer paarweise unabhängig voneinander eingestellt werden, was eine Vielzahl an vorteilhaften Anwendungsfällen eröffnet.

Es ist zur besseren Veranschaulichung der Funktionsweise einer dementsprechenden bevorzugten Ausführungsform auch möglich, zu jedem Koordinatenursprung eine Koordinatenachse zu definieren, die durch den Koordinatenursprung und die Position des Eingabezeigers verläuft. Mit anderen Worten ist der Verlauf der Koordinatenachsen in der Eingabefläche variabel und durch die jeweils aktuelle Position des Eingabezeigers vorgegeben, durch welchen die Koordinatenachsen verlaufen. Die Position auf den Koordinatenachsen definiert dann die Koordinaten.

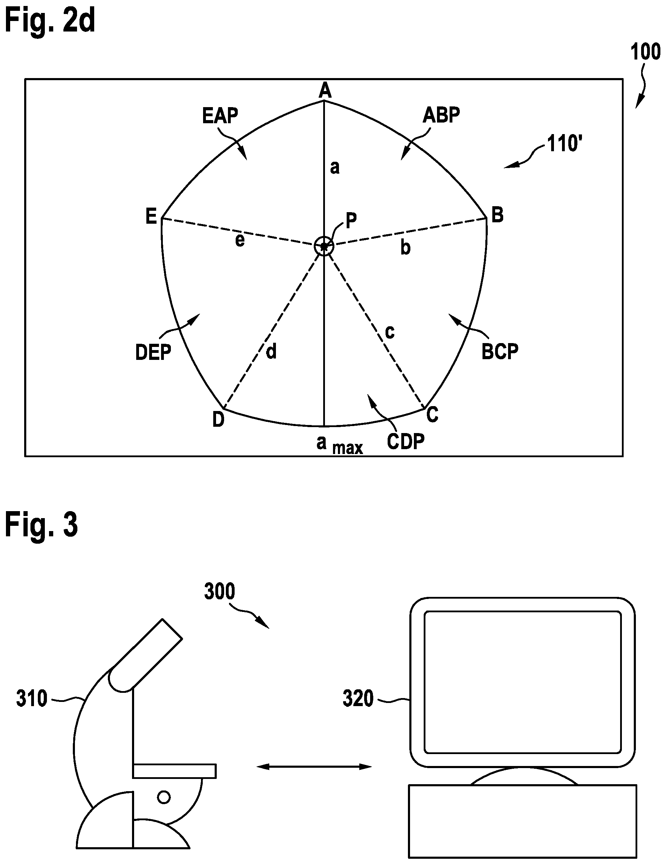

Gemäß einer alternativen Ausführungsform können jedem der wenigstens drei Einstellparameter auch jeweils mehrere, z.B. jeweils zwei, Koordinatenursprünge zugeordnet werden, wobei insbesondere auch jedem Koordinatenursprung auch jeweils mehrere, z.B. jeweils zwei, Einstellparameter zugeordnet werden. Eine solche Ausführungsform eignet sich insbesondere für Vielecke mit mehr als drei Ecken wie beispielsweise in Figur 2d gezeigt, aber auch für Dreiecke. Der Einstellparameterwert ergibt sich dann in Abhängigkeit vom Abstand der Position des Eingabezeigers von wenigstens zwei, insbesondere genau zwei, Koordinatenursprüngen, beispielsweise als Funktion der beiden Abstände, wie z.B. als Summe oder eine einen Flächeninhalt definierenden Funktion.

Es ist zur besseren Veranschaulichung der Funktionsweise einer dementsprechenden bevorzugten Ausführungsform möglich, für jede Koordinate eine Fläche zu definieren, die von den zugeordneten Koordinatenursprüngen und deren jeweiliger Verbindungslinie zu der Position des Eingabezeigers begrenzt wird. Beispielsweise kann die Koordinate dann durch den Flächeninhalt oder durch das Verhältnis dieses Flächeninhalts zum Flächeninhalt der gesamten Eingabefläche bestimmt sein.

Vorzugsweise umfasst die Abhängigkeit des Werts $W_i$ eines Einstellparameters i von der Koordinate $k_i$ einen funktionalen Zusammenhang der Form $W_i = f(k_i)$. Auf diese Weise können beliebige geeignete Einstellzusammenhänge sehr einfach implementiert werden.

Weiter vorzugsweise umfasst das Bestimmen eines Werts für jeden der wenigstens drei Einstellparameter in Abhängigkeit von der für diesen Einstellparameter bestimmten Koordinate auch ein Bestimmen eines Werts für jeden der wenigstens drei Einstellparameter in Abhängigkeit von den Werten für die anderen der wenigstens drei Einstellparameter. Insbesondere kann davon eine Normierung der Werte umfasst sein, beispielsweise so, dass die Summe aller Einstellparameterwerte konstant ist, z.B. 1 bzw. 100% beträgt.

Vorzugsweise bildet die Eingabefläche ein Vieleck, wobei weiter insbesondere die Anzahl der Ecken in einem ganzzahligen Verhältnis zu den Koordinatenursprüngen steht. Auf diese Weise können besonders einfach die Koordinatenursprünge im Verhältnis zu den Eckpunkten des Vielecks definiert werden. Beispielsweise können die Koordinatenursprünge Eckpunkte oder Kantenmittelpunkte zwischen jeweils zwei benachbarten Eckpunkten sein. Gemäß einer weiter bevorzugten Ausführungsform hat die Eingabefläche die Form eines Bogenvielecks, d.h. ein Vieleck, bei dem die Kanten nicht Geraden, sondern Kreisbögen um einen gegenüberliegenden Eckpunkt sind, insbesondere ein Reuleaux-Vieleck. Auf diese Weise ist ausgehend von dem jeweiligen Eckpunkt als Koordinatenursprung immer der jeweilige Kreisradius als maximaler Abstand der Position des Eingabezeigers vom Eckpunkt einstellbar.

Für den Fall, dass genau drei Parameter eingestellt werden können, ist die Ausführung der Eingabefläche als Dreieck, hier insbesondere als Bogen-Dreieck oder Reuleaux-Dreieck, vorteilhaft. Beim Reuleaux-Dreieck ist der Abstand jedes Punktes einer Seite vom gegenüberliegenden Eckpunkt konstant.

Einige oder alle Verfahrensschritte können durch (oder unter Verwendung) einer Hardwarevorrichtung bzw. Recheneinheit ausgeführt werden, wie es zum Beispiel ein Prozessor, ein Mikroprozessor, ein programmierbarer Computer oder eine elektronische Schaltung sein kann. In einigen Ausführungsbeispielen können ein oder mehrere der wichtigsten Verfahrensschritte durch eine solche Vorrichtung ausgeführt werden.

Abhängig von bestimmten Implementierungsanforderungen können Ausführungsbeispiele der Erfindung in Hardware oder Software implementiert werden. Die Implementierung kann mit einem nicht-flüchtigen Speichermedium wie einem digitalen Speichermedium, wie beispielsweise einer Diskette, einer DVD, einem Blu-Ray, einer CD, einem ROM, einem PROM und EPROM, einem EEPROM oder einem FLASH-Speicher, durchgeführt werden, auf dem elektronisch lesbare Steuersignale gespeichert sind, die mit einem programmierbaren Computersystem so zusammenwirken (oder zusammenwirken können), dass das jeweilige Verfahren durchgeführt wird. Daher kann das digitale Speichermedium computerlesbar sein.

Einige Ausführungsbeispiele gemäß der Erfindung umfassen einen Datenträger mit elektronisch lesbaren Steuersignalen, die mit einem programmierbaren Computersystem zusammenwirken können, so dass eines der hierin beschriebenen Verfahren durchgeführt wird.

Im Allgemeinen können Ausführungsbeispiele der vorliegenden Erfindung als Computerprogrammprodukt mit einem Programmcode implementiert werden, wobei der Programmcode für die Ausführung eines der Verfahren wirksam ist, wenn das Computerprogrammprodukt auf einem Computer läuft. Der Programmcode kann beispielsweise auf einem maschinenlesbaren Träger gespeichert werden.

Weitere Ausführungsbeispiele umfassen das Computerprogramm zur Durchführung eines der hierin beschriebenen Verfahren, das auf einem maschinenlesbaren Träger gespeichert ist.

Mit anderen Worten, ein Ausführungsbeispiel der vorliegenden Erfindung ist daher ein Computerprogramm mit einem Programmcode zur Durchführung eines der hierin beschriebenen Verfahren, wenn das Computerprogramm auf einem Computer läuft.

Ein weiteres Ausführungsbeispiel der vorliegenden Erfindung ist daher ein Speichermedium (oder ein Datenträger oder ein computerlesbares Medium), das ein darauf gespeichertes Computerprogramm zum Ausführen eines der hierin beschriebenen Verfahren umfasst, wenn es von einem Prozessor ausgeführt wird. Der Datenträger, das digitale Speichermedium oder das aufgezeichnete Medium sind in der Regel greifbar und/oder nicht übergangslos. Ein weiteres Ausführungsbeispiel der vorliegenden Erfindung ist eine Vorrichtung, wie hierin beschrieben, die einen Prozessor und das Speichermedium umfasst.

Ein weiteres Ausführungsbeispiel der Erfindung ist daher ein Datenstrom oder eine Signalfolge, die das Computerprogramm zur Durchführung eines der hierin beschriebenen Verfahren darstellt. Der Datenstrom oder die Signalfolge kann beispielsweise so konfiguriert werden, dass sie über eine Datenkommunikationsverbindung, beispielsweise über das Internet, übertragen werden.

Ein weiteres Ausführungsbeispiel umfasst ein Verarbeitungsmittel, zum Beispiel einen Computer oder eine programmierbare Logikvorrichtung, das konfiguriert oder angepasst ist, um eines der hierin beschriebenen Verfahren auszuführen.

Ein weiteres Ausführungsbeispiel umfasst einen Computer, auf dem das Computerprogramm zum Ausführen eines der hierin beschriebenen Verfahren installiert ist.

Ein weiteres Ausführungsbeispiel gemäß der Erfindung umfasst eine Vorrichtung oder ein System, das konfiguriert ist, um (zum Beispiel elektronisch oder optisch) ein Computerprogramm zum Ausführen eines der hierin beschriebenen Verfahren an einen Empfänger zu übertragen. Der Empfänger kann beispielsweise ein Computer, eine mobile Vorrichtung, eine Speichervorrichtung oder dergleichen sein. Die Vorrichtung oder das System kann beispielsweise einen Dateiserver zum Übertragen des Computerprogramms an den Empfänger umfassen.

In einigen Ausführungsbeispielen kann eine programmierbare logische Vorrichtung (z.B. eine feldprogrammierbare Gatteranordnung, FPGA) verwendet werden, um einige oder alle Funktionalitäten der hierin beschriebenen Verfahren auszuführen. In einigen Ausführungsbeispielen kann eine feldprogrammierbare Gatteranordnung mit einem Mikroprozessor zusammenarbeiten, um eines der hierin beschriebenen Verfahren durchzuführen. Im Allgemeinen werden die Verfahren vorzugsweise von jedem Hardwaregerät durchgeführt.

Die Erfindung betrifft weiterhin ein System, wie z.B. ein Mikroskopsystem, mit wenigstens einer Systemkomponente, insbesondere einer Lichtquelle (z.B. LED, Laser), von der ein Beleuchtungsstrahlengang ausgeht, einer optischen Abbildungseinrichtung (z.B. Objektiv oder optischer Zoom), einer Kontrastiervorrichtung (z.B. Phasenring bei der Phasenkontrastmikroskopie, DIC-Prismen, Polfilter oder Modulationsscheiben), einem Pinhole, einer Strahlumlenkeinrichtung (z.B. Scanspiegel), einem Lichtdetektor (z.B. Photomultiplier oder Digitalkamera) oder einer Anzeigeeinheit (z.B. Recheneinheit/PC mit Monitor), jeweils mit wenigstens einem elektrisch einstellbaren Komponentenparameter, und einer erfindungsgemäßen Recheneinheit.

Zu den Komponentenparametern der Lichtquelle zählen insbesondere Beleuchtungsintensität, Wellenlänge, Frequenz (zeitlich und/oder räumlich) eines Beleuchtungsmusters, Durchmesser eines Beleuchtungsstrahls und Dicke einer Lichtscheibe.

Zu den Komponentenparametern der optischen Abbildungseinrichtung zählen insbesondere ein Vergrößerungsfaktor und eine Beleuchtungsapertur.

Zu den Komponentenparametern der Kontrastiervorrichtung zählen insbesondere Blendenzahl und Einschwenk- oder Einstellparameter von (insbesondere kontrasterzeugenden) optischen Komponenten im Strahlengang, wie beispielsweise DIC-Prismen, Phasenringen, Modulationsscheiben oder Filterwürfeln (Filtercube = Satz aus optischen Filtern und Spiegeln insbesondere zur Verwendung in der Fluoreszenzmikroskopie).

Zu den Komponentenparametern der Strahlumlenkeinrichtung zählen insbesondere Scangeschwindigkeit (gescannte Zeilen pro Zeit), Zoom (kleinerer Rotationsbereich der Galvanometerantriebe), Azimuth des TIRF-Beleuchtungsstrahlengangs.

Zu den Komponentenparametern des Lichtdetektors zählen insbesondere Verstärkung (Gain), Offset, Bittiefe bzw. Farbtiefe, Belichtungszeit (Kamera), Abtastrate (Lichtdetektor), Samplingrate (Frequenz einer Aufnahmenserie (time lapse) oder des Live-Bildes), Binning (Zusammenfassen benachbarter Bildelemente (Pixel) zu einem virtuellen Bildpunkt).

Zu den Komponentenparametern des Pinholes zählt insbesondere die Größe der Öffnung der Blende.

Zu den Komponentenparametern der Anzeigeeinheit zählen insbesondere Parameter der Darstellung, wie z.B. Helligkeit (brightness) und Kontrast (contrast), und/oder Parameter der Bildbearbeitung, wie z.B. Anzahl der zu verrechnenden Bilder zu einer HDR-Aufnahme ("high dynamic range image") und Anzahl der Bilder, über die ein Mittelwert gebildet wird.

Jeder Komponentenparameter hängt von wenigstens einem Einstellparameter ab. Insbesondere kann dabei jeder Komponentenparameter zugleich ein Einstellparameter sein, d.h. durch die Position des Eingabezeigers wird unmittelbar ein Komponentenparameter eingestellt. Es kann jedoch auch vorgesehen sein, dass sich ein oder mehrere Komponentenparameter nur mittelbar aus einem oder mehreren Einstellparametern ergeben, z.B. anhand von funktionalen Zusammenhängen, Kennlinien, Kennfeldern, Lookup-Tabellen usw. Beispielsweise kann ein Einstellparameter "hell" die Beleuchtungsintensität und oder die Detektorverstärkung erhöhen und/oder die Belichtungszeit verlängern. Ein Einstellparameter "probenschonend" kann die Beleuchtungsintensität verringern und/oder die Belichtungszeit verkürzen und gleichzeitig die Detektorverstärkung erhöhen.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Figurenbeschreibung

Figur 1 zeigt eine bevorzugte Ausführungsform eines erfindungsgemäßen Mikroskopsystems als Blockdiagramm.

Figur 2a zeigt schematisch eine erste bevorzugte Ausführungsform einer Eingabeeinheit.

Figur 2b zeigt die Ausführungsform gemäß Figur 2a bei Einsatz einer alternativen Auswertemethode.

Figur 2c zeigt schematisch eine zweite bevorzugte Ausführungsform einer Eingabeeinheit.

Figur 2d zeigt schematisch eine dritte bevorzugte Ausführungsform einer Eingabeeinheit.

Figur 3 zeigt schematisch ein System, das ausgebildet ist zum Ausführen einer bevorzugten Ausführungsform eines erfindungsgemäßen Verfahrens.

Figur 4 zeigt eine bevorzugte Ausführungsform eines erfindungsgemäßen Verfahrens als Blockdiagramm.

Ausführungsform(en) der Erfindung

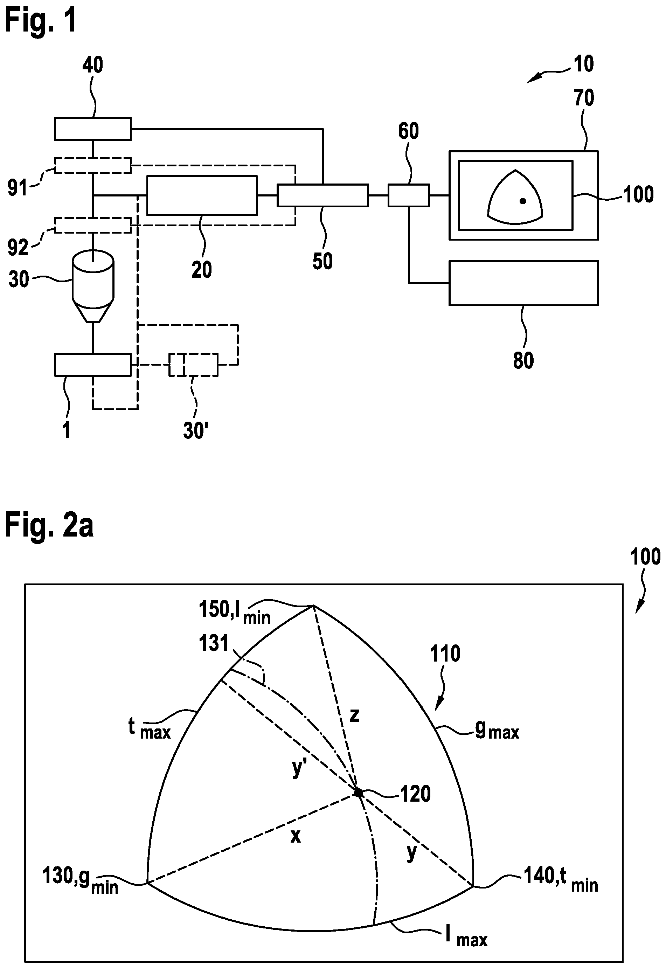

In Figur 1 ist eine bevorzugte Ausführungsform eines hier als Mikroskopsystem ausgebildeten erfindungsgemäßen Systems als Blockdiagramm dargestellt und insgesamt mit 10 bezeichnet. Das Mikroskopsystem 10 weist hier als Systemkomponenten bzw. Mikroskopkomponenten eine Lichtquelle 20, z.B. eine LED-Lichtquelle, eine optische Abbildungseinrichtung 30 und einen Lichtdetektor 40, z.B. eine Digitalkamera, auf. Die optische Abbildungseinrichtung 30 kann als Objektiv oder optischer Zoom ausgebildet sein oder wenigstens eine dieser beiden Komponenten aufweisen. In der optischen Abbildungseinrichtung können auch eine Kontrastiervorrichtung und/oder eine Strahlumlenkeinrichtung als weitere Mikroskopkomponenten vorgesehen sein.

Von der Lichtquelle 20 geht ein Beleuchtungsstrahlengang aus, der durch die optische Abbildungseinrichtung auf eine Probe 1 und von dort zum Detektor 40 geführt wird (Auflichtbeleuchtung). Bei einer sog. Durchlichtbeleuchtung wird der Beleuchtungsstrahlengang von der der Abbildungseinrichtung 30 abgewandten Seite auf die Probe 1 geführt (gestrichelte Linie) und tritt durch die Probe 1 hindurch. Handelt es zusätzlich um ein sog. Lichtscheibenmikroskop, ist auch zwischen Lichtquelle 20 und Probe 1 eine zusätzliche optische Abbildungseinrichtung 30' vorgesehen, welche den lichtblattförmigen Beleuchtungsstrahl erzeugt, der auf bzw. in die Probe gerichtet wird.

Bei der sog. Konfokalmikroskopie befindet sich zwischen Lichtquelle 20 und Abbildungseinrichtung 30 noch ein Scanspiegel 92, und zwischen Scanspiegel 92 und Lichtdetektor 40 noch ein sog. Pinhole 91. Der konfokale Beleuchtungsstrahlengang wird auf die Probe 1 fokussiert und mittels der Abbildungsvorrichtung 30 durch das Pinhole 91 auf den Detektor 40 abgebildet..

Jede der Mikroskopkomponenten weist wenigstens einen elektrisch einstellbaren Komponentenparameter auf. Das Mikroskopsystem 10 weist weiterhin ein Steuergerät 50 auf, das elektrische Signale erzeugt und an die Mikroskopkomponenten 20, 30, 40 übermittelt und damit die elektrisch einstellbaren Komponentenparameter einstellt.

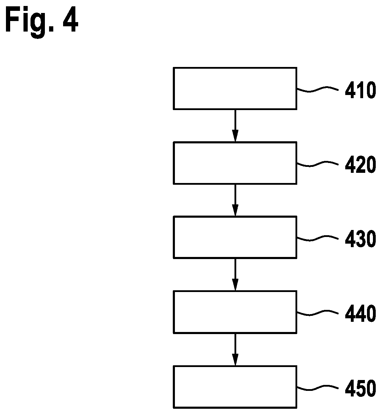

Das Mikroskopsystem 10 weist weiterhin als Mensch/Maschinen-Schnittstelle eine als Computer 60 ausgebildete Recheneinheit gemäß einer bevorzugten Ausführungsform der Erfindung mit einer Anzeigeeinheit 70 auf, wobei der Computer auf der Anzeigeeinheit 70 eine Eingabeeinheit 100 in Form einer graphischen Benutzer-Schnittstelle erzeugt, mittels der wenigstens drei elektrisch einstellbare Komponentenparameter einstellbar sind. Der Computer 60 weist Computereingabemittel 80 auf, z.B. Maus und/oder Tastatur und/oder Berührungs- und/oder Gestensensorik (z.B. eines Sensorbildschirms bzw. Touchscreens). Der Computer 60 ist insbesondere programmtechnisch dazu eingerichtet, eine bevorzugte Ausführungsform eines erfindungsgemäßen Verfahrens durchzuführen, wie sie beispielsweise in Figur 4 gezeigt ist.

Der Computer 60 ist weiterhin datenübertragend mit dem Steuergerät 50 verbunden und veranlasst, dass das Steuergerät 50 elektrische Signale entsprechend den eingestellten Werten der Komponentenparameter erzeugt und an die entsprechenden Mikroskopkomponenten ausgibt. Das Steuergerät 50 kann auch in den Computer 60 integriert sein, beispielsweise in Form einer Schnittstellenkarte o.ä.

In Figur 2a ist eine bevorzugte Ausführungsform einer Eingabeeinheit schematisch dargestellt und insgesamt mit 100 bezeichnet. Die Eingabeeinheit 100 weist eine Eingabefläche 110 und einen darin frei positionierbaren Eingabezeiger 120 auf. Im gezeigten Beispiel bildet die Eingabefläche 110 ein Reauleux-Dreieck mit drei Eckpunkten 130, 140, 150. Jede Koordinate x, y, z bestimmt sich durch den Abstand der Position des Eingabezeigers vom zugehörigen Eckpunkt als Koordinatenursprung. Somit sind durch die Position des Eingabezeigers 120 in der Eingabefläche 110 die drei Koordinaten x, y, z, wie gezeigt, bestimmt.

Beispielsweise kann eine solche Eingabeeinheit verwendet werden, um Werte für drei Einstellparameter vorzugeben, wobei die Werte nicht vollkommen unabhängig voneinander sein sollen.

Beispielsweise sind für die Belichtung eines Bildes Verstärkung g (Gain) des Lichtdetektors, Intensität I der Beleuchtung und Belichtungszeit t als Einstellparameter relevant.

Im vorliegenden Beispiel wird die Verstärkung g durch den Abstand zwischen dem Eckpunkt 130 und der Position des Eingabezeigers 120 von $g_{min}$ bis $g_{max}$, die Intensität I durch den Abstand zwischen dem Eckpunkt 150 und der Position des Eingabezeigers 120 von $I_{min}$ bis $I_{max}$ und die Belichtungszeit t durch den Abstand zwischen dem Eckpunkt 140 und der Position des Eingabezeigers 120 von $t_{min}$ bis $t_{max}$ vorgegeben.

Auf diese Weise führt im vorliegenden Beispiel für eine bestimmte Verstärkung (d.h. eine Bewegung der Position des Eingabezeigers 120 auf einem Kreisbogen 131 um 130) eine Erhöhung der Intensität automatisch zu einer Verringerung der Belichtungszeit und umgekehrt. Weiterhin führt für eine bestimmte Intensität eine Verringerung der Verstärkung automatisch zu einer Erhöhung der Belichtungszeit und umgekehrt. Und schließlich führt für eine bestimmte Belichtungszeit eine Erhöhung der Verstärkung zu einer Verringerung der Intensität und umgekehrt. Auf diese Weise kann eine für den Benutzer besonders intuitive und für den Anwendungszweck besonders geeignete und sichere Möglichkeit der Parametereingabe bereitgestellt werden. Es versteht sich, dass auch zahlreiche andere Kombinationen möglich sind.

Es sei an dieser Stelle der Vollständigkeit halber erwähnt, dass der Abstand zwischen einem Eckpunkt und der Position des Eingabezeigers äquivalent ist zum Abstand zwischen der Position des Eingabezeigers und der gegenüberliegenden Tangente an das Dreieck, wie am Beispiel von $y'=t_{max} - t_{min} - y$ gezeigt, und somit ebenfalls eine Abhängigkeit vom Abstand beinhaltet. Dies wird hier auch als invertierte Koordinate bezeichnet.

Zweckmäßigerweise ergeben sich die Einstellparameterwerte $W_i$ für die Einstellparameter als normierte Werte der Koordinaten. Betragen beispielsweise die Abstände (entspricht den Koordinaten x, y, z) der Position des Eingabezeigers (71, 46, 58) Längeneinheiten, ergeben sich daraus auf $W_x + W_y + W_z = 1$ normierte Einstellparameterwerte zu:

$$W_x = 71/(71+46+58) = 0{,}41 \text{ bzw. } 41\%$$

$$W_y = 46/(71+46+58) = 0{,}26 \text{ bzw. } 26\%$$

$$W_z = 58/(71+46+58) = 0{,}33 \text{ bzw. } 33\%$$

Diese Ausführungsform eignet sich somit insbesondere für eine absolute Vorgabe der zugehörigen Komponentenparameterwerte. Welche konkreten Komponentenparameterwerte damit verbunden sind, kann werkseitig vorgegeben sein oder kann durch den Benutzer in der jeweiligen Anwendung definiert werden. Hierbei kann es sich um funktionale Zusammenhänge, Kennlinien, Kennfelder oder Lookup-Tabellen handeln, die auch in der Steuersoftware hinterlegt sein können. Beispielsweise können die Einstellparameterwerte linear auf den Bereich zwischen min und max abgebildet werden, um den zugehörigen Komponentenparameterwert $G_x$ zu erhalten, d.h.

$$G_x = g_{min} + W_x^* \, (g_{max} - g_{min}).$$

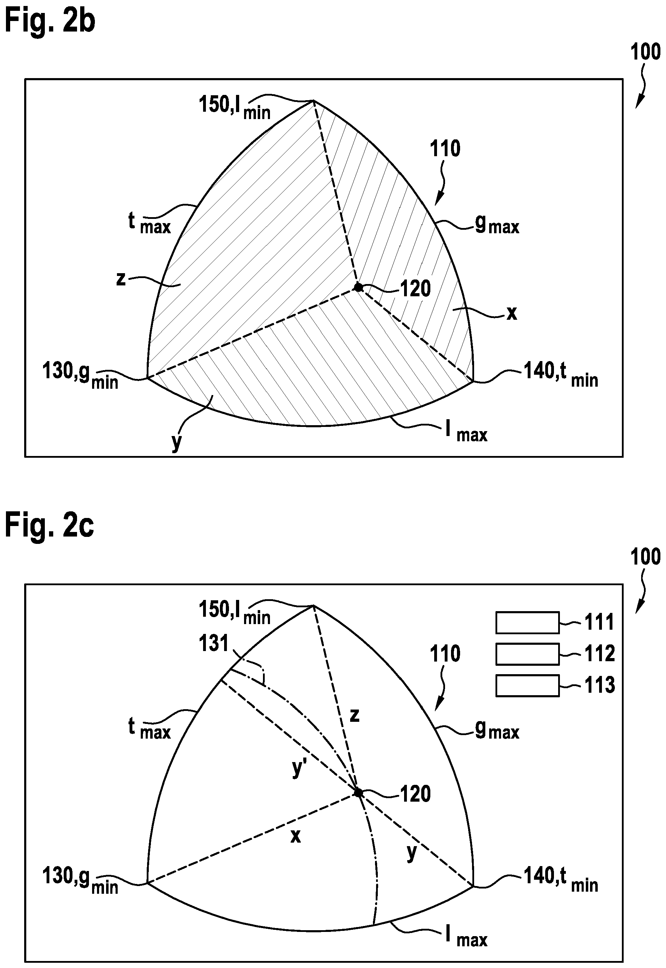

Eine alternative Bestimmungsmethode zur Bestimmung der Koordinaten x, y, z, wie in Figur 2b gezeigt, besteht darin, dass jedem Einstellparameter genau zwei der Koordinatenursprünge 130, 140, 150 zugeordnet sind, d.h. 130 und 140 für I, 140 und 150 für g, und 150 und 130 für t. Dementsprechend bestimmen sich dann die drei Koordinaten x, y, z der Position des Eingabezeigers 120 in Abhängigkeit von den zwei Abständen zu den beiden zugeordneten Koordinatenursprüngen. Vorliegend ist die Abhängigkeit einer Koordinate x, y, z von den beiden Abständen beispielsweise gegeben durch einen funktionalen Zusammenhang, welcher den von den Koordinatenursprüngen und deren Verbindung mit der Position des Eingabezeigers 120 definierten Flächeninhalt angibt, also z.B. den Flächeninhalt des Dreiecks 130/120/150 als Koordinate y für t, der Flächeninhalt des Dreiecks 150/120/140 als Koordinate x für g und der Flächeninhalt des Dreiecks 140/120/130 als Koordinate z für I.

Es sei darauf hingewiesen, dass beispielsweise der Flächeninhalt des Dreiecks 130/120/150 von den Längen beider Seiten 130/120 und 120/150 abhängt (sowie von der Geraden 130/150, welche aber ebenso fest ist wie der Flächeninhalt des zugehörigen Kreissegments, welches von der Geraden 130/150 und der Seite $t_{max}$ begrenzt ist). Je näher der Eingabezeiger 120 an 140 herangeführt wird, desto größer ist die genannte Fläche.

Zweckmäßigerweise ergeben sich auch hier die Einstellparameterwerte $W_i$ für die Einstellparameter als normierte Werte der Koordinaten. Betragen beispielsweise die Flächen $A_i$ (entspricht den Koordinaten x, y, z) der drei Dreiecke (71, 46, 58) Flächeneinheiten, ergeben sich daraus auf $W_x + W_y + W_z = 1$ normierte Einstellparameterwerte zu:

$$W_x = 71/(71+46+58) = 0{,}41 \text{ bzw. } 41\%$$

$$W_y = 46/(71+46+58) = 0{,}26 \text{ bzw. } 26\%$$

$$W_z = 58/(71+46+58) = 0{,}33 \text{ bzw. } 33\%$$

Um die Lage der Minimalwerte an den Eckpunkten beizubehalten, wie in Figur 2b gezeigt, kann der Einstellparameterwert aus der invertierten Fläche ($A_i^* = 1 - A_i$) bestimmt werden:

$$W_x^* = 29/(29+54+42) = 0{,}232 \text{ bzw. } 23{,}2\%$$

$$W_y^* = 54/(29+54+42) = 0{,}432 \text{ bzw. } 43{,}2\%$$

$$W_z^* = 42/(29+54+42) = 0{,}336 \text{ bzw. } 33{,}6\%$$

Die Eingabeeinheit 100 ist als graphische Benutzerschnittstelle (engl. "graphical user interface", GUI) auf der Anzeigeeinheit 70, insbesondere einem Sensorbildschirm (Touchscreen), des Computers 60 zur Steuerung des Mikroskopsystems 10 ausgebildet, auf welcher die Eingabefläche 110 (sowie gegebenenfalls Achsbeschriftungen usw.) dargestellt wird. In diesem Fall bietet es sich an, den Eingabezeiger 120 mittels herkömmlicher Computereingabemittel 80 direkt (z.B. Finger, Stift usw. bei einem Touchscreen) oder indirekt (z.B. Maus oder Joystick usw.) zu positionieren. Es kann vorgesehen sein, dass die Position des Eingabezeigers und damit die Koordinaten und die Einstellparameter ständig oder in regelmäßigen Abständen bestimmt werden, d.h. dass unmittelbar durch Verschieben bzw. Positionieren des Eingabezeigers bzw. eine gewisse Zeit danach auch die entsprechenden Einstellparameter verändert werden. Ebenso kann vorgesehen sein, dass für die Übernahme der durch die Position des Eingabezeigers eingestellten Werte noch eine Bestätigung erfolgen muss, z.B. durch Loslassen eines für das Positionieren verwendeten Aktors, z.B. Maustaste o.ä., oder durch Drücken bzw. Klicken eines Bestätigungsfeldes o.ä. Nach der Übernahme veranlasst der Computer 60, dass das Steuergerät 50 die entsprechenden Einstellparameter auf die eingestellten Werte einstellt.

Gemäß einer noch weiteren bevorzugten Ausführungsform gemäß Figur 2c kann Platz innerhalb der Eingabeeinheit 100 auch vorteilhaft für andere Funktionen genutzt werden, beispielsweise für Auslöseflächen. Insbesondere sind daher hier rein beispielhaft neben der Eingabefläche 110 drei Auslöseflächen 111, 112, 113 angeordnet. Beispielsweise durch Positionieren des Eingabezeigers 120 in einer der drei Auslöseflächen 111, 112 oder 113 oder durch Klicken (Computereingabemittel) kann eine mit der jeweiligen Auslösefläche verknüpfte Funktion ausgelöst werden. Insbesondere eignet sich dies für eine Freigabe-bzw. Bestätigungsfunktion für die Position des Eingabezeigers 120, wie oben erläutert.

Vorzugsweise ist die Eingabeeinheit 100 dazu eingerichtet, dass die Funktion einer oder mehrerer Auslöseflächen vom Anwender zuweisbar ist. Auf diese Weise kann ein Bediener insbesondere die ihm wichtigen Funktion mit auf die Eingabeeinheit legen.

Die Einstellparameter müssen nicht zwangsläufig technische Parameter sein, vielmehr können diese auch qualitative Parameter (z.B. dem Nutzer einfacher zu vermittelnde Begriffe) wie "probenschonende Bildgebung", "schnelle Bildgebung" oder "gute Bildgebung" sein. Der Nutzer muss hier insbesondere nicht wissen, welche technische Umsetzung hinter einer schnelleren oder besseren Bildgebung steckt. Schneller kann insbesondere bedeuten, dass die Belichtungszeit/Scannergeschwindigkeit verändert wird, aber auch, dass mit mehr Licht oder veränderter Verstärkung des Detektors weitergearbeitet werden muss, um die Belichtung konstant zu halten. Umgekehrt kann die Bildqualität dadurch verbessert werden, dass die Verstärkung reduziert wird oder über mehrere Aufnahmen gemittelt wird. Die Werte der für die jeweilige Einstellung relevanten Komponentenparameter ergeben sich dann aus den Einstellparameterwerten, z.B. anhand von funktionalen Zusammenhängen, Kennlinien, Kennfeldern, Lookup-Tabellen usw., wobei auch Randbedingungen berücksichtigt werden können. Eine Randbedingung kann z.B. sein, dass das Bild korrekt belichtet sein muss und/oder dass die Probe nicht beschädigt werden darf.

In Figur 2d ist eine weitere bevorzugte Ausführungsform einer Eingabeeinheit 100 mit einer Eingabefläche 110" und dem darin frei positionierbaren Eingabezeiger 120 dargestellt. Im gezeigten Beispiel bildet die Eingabefläche 110" ein Reauleux-Fünfeck mit drei Eckpunkten A, B, C, D, E. Jede Koordinate a, b, c, d, e bestimmt sich durch den Abstand der Position P des Eingabezeigers vom zugehörigen Eckpunkt als Koordinatenursprung. Somit sind durch die Position P des Eingabezeigers 120 in der Eingabefläche 110" die fünf Koordinaten a, b, c, d, e wie gezeigt, bestimmt. Eine maximale Koordinate, wie z.B. $a_{max}$, bestimmt sich hier durch die gegenüberliegende Seite.

Eine alternative Bestimmungsmethode zur Bestimmung der Koordinaten ist ebenfalls in der Figur 2d illustriert. Hierbei sind jedem Einstellparameter genau zwei der Koordinatenursprünge A, B, C, D, E zugeordnet; im konkreten Fall jeweils zwei benachbarte, d.h. A und B, B und C, C und D, D und E, E und A. Dementsprechend bestimmen sich hier die fünf Koordinaten der Position P des Eingabezeigers in Abhängigkeit von den zwei Abständen zu den beiden zugeordneten Koordinatenursprüngen. Vorliegend ist die Abhängigkeit einer Koordinate von den beiden Abständen beispielsweise gegeben durch einen funktionalen Zusammenhang, welcher den von den Koordinatenursprüngen und der Position P des Eingabezeigers definierten Flächeninhalt angibt, also z.B. den Flächeninhalt des Dreiecks ABP, welcher naturgemäß von den Längen der Seiten AP und PB abhängt (sowie von AB, welche aber ebenso fest ist wie der Flächeninhalt des von AB und der Außenseite gebildeten Kreissegments).

Zweckmäßigerweise ergeben sich die Werte $W_i$ für die Einstellparameter als normierte Werte der Koordinaten, hier insbesondere normiert auf den gesamten Flächeninhalt der Eingabefläche 110".

Einige Ausführungsbeispiele beziehen sich auf ein Mikroskop, das ein System umfasst, wie in Verbindung mit Figur 1 beschrieben. Alternativ kann ein Mikroskop Teil eines Systems, wie in Verbindung mit mit Figur 1 beschrieben, sein oder mit demselben verbunden sein. Figur 3 zeigt eine schematische Darstellung eines Systems 300, das ausgebildet ist zum Ausführen eines hierin beschriebenen Verfahrens. Das System 300 umfasst ein Mikroskop 310 und ein Computersystem 320. Das Mikroskop 310 ist ausgebildet zum Aufnehmen von Bildern und ist mit dem Computersystem 320 verbunden. Das Computersystem 320 ist ausgebildet zum Ausführen von zumindest einem Teil eines hierin beschriebenen Verfahrens. Das Computersystem 320 kann ausgebildet sein zum Ausführen eines Maschinenlern-Algorithmus. Das Computersystem 320 und das Mikroskop 310 können getrennte Einheiten sein, können aber auch zusammen in einem gemeinsamen Gehäuse integriert sein. Das Computersystem 320 könnte Teil eines zentralen Verarbeitungssystems des Mikroskops 310 sein und/oder das Computersystem 320 könnte Teil einer Teilkomponente des Mikroskops 310 sein, wie eines Sensor, eines Aktuator, einer Kamera oder einer Beleuchtungseinheit, usw. des Mikroskops 310.

Das Computersystem 320 kann eine lokale Computervorrichtung (z.B. Personalcomputer, Laptop, Tablet-Computer oder Mobiltelefon) mit einem oder mehreren Prozessoren und einer oder mehreren Speichervorrichtungen oder kann ein verteiltes Computersystem (z. B. ein Cloud-Computing-System mit einem oder mehreren Prozessoren oder einer oder mehreren Speichervorrichtungen, die an verschiedenen Stellen verteilt sind, zum Beispiel an einem lokalen Client und/oder einer oder mehreren Remote-Server-Farms und/oder Datenzentren) sein. Das Computersystem 320 kann irgendeine Schaltung oder Kombination von Schaltungen umfassen. Bei einem Ausführungsbeispiel kann das Computersystem 320 einen oder mehrere Prozessoren umfassen, die von irgendeinem Typ sein können. Nach hiesigem Gebrauch kann Prozessor irgendein Typ von Rechenschaltung bedeuten, wie beispielsweise, aber nicht beschränkt auf, ein Mikroprozessor, ein Mikrocontroller, ein Mikroprozessor mit komplexem Befehlssatz (CISC), ein Mikroprozessor mit reduziertem Befehlssatz (RISC), ein Sehr-langes-Anweisungswort- (Very Long Instruction Word; VLIW) Mikroprozessor, ein Graphikprozessor, ein digitaler Signalprozessor (DSP), ein Multi-Core-Prozessor, ein feld-programmierbares Gate-Array (FPGA), z.B. eines Mikroskops oder einer Mikroskopkomponente (z. B. Kamera) oder irgendein anderer Typ von Prozessor oder Verarbeitungsschaltung. Andere Typen von Schaltungen, die in dem Computersystem 320 umfasst sein können, können eine speziell angefertigte Schaltung, eine anwendungsspezifische integrierte Schaltung (ASIC) oder Ähnliches, wie beispielsweise eine oder mehrere Schaltungen (z. B. eine Kommunikationsschaltung) zur Verwendung bei drahtlosen Vorrichtungen wie z. B. Mobiltelefonen, Tablet-Computern, Laptop-Computern, Funksprechgeräten und ähnlichen elektronischen Systemen sein. Das Computersystem 320 kann eine oder mehrere Speichervorrichtungen umfassen, die ein oder mehrere Speicherelemente umfassen können, die für die jeweilige Anwendung geeignet sind, wie beispielsweise einen Hauptspeicher in der Form eines Direktzugriffsspeichers (RAM, Random Access Memory), eine oder mehrere Festplatten und/oder ein oder mehrere Laufwerke, die entfernbare Medien, wie beispielsweise CDs, Flash-Speicherkarten, DVD und Ähnliches handhaben. Das Computersystem 320 kann auch eine Anzeigevorrichtung, einen oder mehrere Lautsprecher, und eine Tastatur und/oder Steuerung umfassen, die eine Maus, Trackball, Touchscreen, Stimmerkennungsvorrichtung oder irgendeine andere Vorrichtung umfassen kann, die es einem Systemnutzer erlaubt, Information in das Computersystem 320 einzugeben und Information von demselben zu empfangen.

Figur 4 zeigt eine bevorzugte Ausführungsform eines erfindungsgemäßen Verfahrens als Blockdiagramm, welches unter Verweis auf die Figuren 1 und 2 beschrieben wird.

In einem Schritt 400 wird, von dem Computer 60, die Eingabeeinheit 100 auf der Anzeigeeinheit 70, beispielsweise einem Monitor oder Touchscreen, dargestellt.

In einem Schritt 410 positioniert ein Anwender den Eingabezeiger 120 mittels der Computereingabemittel 80 so innerhalb der Eingabefläche 110, dass er die erwünschten Komponentenparameterwerte erhält. Insbesondere kann vorgesehen sein, dass immer die aktuellen Einstellparameterwerte und/oder Komponentenparameterwerte auf der Anzeigeeinheit 70, beispielsweise innerhalb der Eingabeeinheit 100, dargestellt werden. Beispielsweise kann das Positionieren durch Klicken in die Eingabefläche oder durch Klicken-und-Ziehen (sog. "drag-and-drop") erfolgen.

In einem Schritt 420 bestimmt der Computer 60 die Position des Eingabezeigers 120, beispielsweise sofort oder ausgelöst durch Einfach- oder Doppel-Klicken in die Eingabefläche, durch ein Betätigen einer entsprechenden Auslösefläche oder eines entsprechenden Auslöseaktuators (z.B. Maustaste, Taster), oder durch Ablauf einer gewissen Zeit nach dem Positionieren usw. Das Bestimmen der Position umfasst insbesondere eine Computerfunktion, welche Computer-Koordinaten der Position liefert. Die Computer-Koordinaten können beispielsweise x/y-Koordinaten sein.

Eine neue Bestimmung der Position des Eingabezeigers 120 kann auch erfolgen, indem der Eingabezeiger 120 mit dem Mauszeiger angeklickt und verschoben wird (englisch: drag-and-drop). Sobald die Maustaste losgelassen wird, bestimmt der Computer 60 automatisch die Position des Eingabezeigers 120 neu. Somit kann die Bestimmung der Position direkt nach der (Re-)Positionierung des Eingabezeigers erfolgen oder durch eine weitere in der Gesamtsoftware eingebundene Funktion angestoßen werden, beispielsweise durch Anklicken eines Aktivierungsfeldes.

In einem anschließenden Schritt 430 bestimmt der Computer 60 jeweils eine Koordinate x, y, z der Position des Eingabezeigers 120 für jeden der drei Einstellparameter in Abhängigkeit von dem Abstand der Position des Eingabezeigers 120 von dem dem jeweiligen Einstellparameter zugeordneten Koordinatenursprung 130, 140, 150, beispielsweise sofort oder ausgelöst wie im Zusammenhang mit der Bestimmung der Position des Eingabezeigers 120 in Schritt 420 beschrieben.

In einem anschließenden Schritt 440 bestimmt der Computer 60 einen Einstellparameterwert $W_x$, $W_y$, $W_z$ für jeden der drei Einstellparameter in Abhängigkeit von der für diesen Einstellparameter bestimmten Koordinate x, y, z, wie oben erläutert, beispielsweise sofort oder ausgelöst wie im Zusammenhang mit der Bestimmung der Position des Eingabezeigers 120 in Schritt 420 beschrieben.

In einem anschließenden Schritt 450 bestimmt der Computer 60 einen Komponentenparameterwert für jeden Einstellparameterwert und veranlasst, dass das Steuergerät 50 die entsprechenden Einstellparameter auf die eingestellten Werte einstellt, beispielsweise sofort oder ausgelöst wie im Zusammenhang mit der Bestimmung der Position des Eingabezeigers 120 in Schritt 420 beschrieben. Es versteht sich, dass alle Schritte 420, 430, 440, 450 sofort ausgeführt werden können und andernfalls ein einmaliges Auslösen ausreichend ist.

Der Begriff "und/oder" umfasst alle Kombinationen von einem oder mehreren der zugehörigen aufgeführten Elemente und kann mit "/" abgekürzt werden.

Obwohl einige Aspekte im Rahmen einer Vorrichtung beschrieben werden, ist es klar, dass diese Aspekte auch eine Beschreibung des entsprechenden Verfahrens darstellen, wobei ein Block oder eine Vorrichtung einem Verfahrensschritt oder einer Funktion eines Verfahrensschritts entsprechen kann. Analog dazu können Aspekte, die im Rahmen eines Verfahrensschritts beschrieben werden, auch eine Beschreibung eines entsprechenden Blocks oder Elements oder einer Eigenschaft einer entsprechenden Vorrichtung darstellen.

**Patentansprüche**

1.  Computerimplementiertes Verfahren zum Bestimmen jeweils eines Werts für wenigstens drei Einstellparameter mittels einer Eingabeeinheit (100) in Form einer graphischen Benutzer-Schnittstelle mit einem in einer Eingabefläche (110) positionierbaren Eingabezeiger (120), wobei wenigstens zwei der wenigstens drei Einstellparameter unabhängig voneinander einstellbar sind, umfassend:

    Bestimmen einer Position des Eingabezeigers (120) innerhalb der Eingabefläche (110),
    Bestimmen einer Koordinate (x, y, z) der Position des Eingabezeigers (120) für jeden der wenigstens drei Einstellparameter in Abhängigkeit von jeweils einem Abstand der Position des Eingabezeigers (120) von wenigstens einem dem jeweiligen Einstellparameter zugeordneten Koordinatenursprung (130, 140, 150), Bestimmen eines Werts für jeden der wenigstens drei Einstellparameter in Abhängigkeit von der für diesen Einstellparameter bestimmten Koordinate (x, y, z).

2. Verfahren nach Anspruch 1, wobei jedem der wenigstens drei Einstellparameter ein unterschiedlicher Koordinatenursprung (130, 140, 150) zugeordnet wird, oder wobei jedem der wenigstens drei Einstellparameter wenigstens zwei Koordinatenursprünge (130, 140, 150) zugeordnet werden.

3. Verfahren nach einem der vorhergehenden Ansprüche, wobei das Bestimmen eines Werts für jeden der wenigstens drei Einstellparameter in Abhängigkeit von der für diesen Einstellparameter bestimmten Koordinate (x, y, z) ein Bestimmen eines Werts für jeden der wenigstens drei Einstellparameter in Abhängigkeit von den Werten für die anderen der wenigstens drei Einstellparameter umfasst.

4. Verfahren nach einem der vorhergehenden Ansprüche, wobei die Eingabefläche (110) als ein Vieleck ausgebildet ist.

5. Verfahren nach Anspruch 4, wobei das Vieleck ein Reuleaux-Vieleck ist.

6. Verfahren nach Anspruch 4 oder 5, wobei wenigstens ein oder jeder Eckpunkt des Vielecks ein Koordinatenursprung (130, 140, 150) ist.

7. Verfahren nach Anspruch 6, wobei die Eingabefläche (110) als ein Reuleaux-Vieleck ausgebildet ist, dessen Ecken jeweils einen Koordinatenursprung (130, 140, 150) definieren.

8. Verfahren nach einem der vorhergehenden Ansprüche, umfassend das Bestimmen jeweils eines Werts für genau drei Einstellparameter und/oder ein Bestimmen eines Betätigens wenigstens einer Auslösefläche (111, 112, 113) der Eingabeeinheit.

9. Recheneinheit (60) mit einer Anzeigeeinheit (70), die eingerichtet ist zum:

   Darstellen einer Eingabeeinheit (100) in Form einer graphischen Benutzer-Schnittstelle mit einem in einer Eingabefläche (110) positionierbaren Eingabezeiger (120) auf der Anzeigeeinheit (70),
   Bestimmen einer Position des Eingabezeigers (120) innerhalb der Eingabefläche (110),

Bestimmen einer Koordinate (x, y, z) der Position des Eingabezeigers (120) für jeweils einen von wenigstens drei Einstellparametern in Abhängigkeit von jeweils einem Abstand der Position des Eingabezeigers (120) von wenigstens einem dem jeweiligen Einstellparameter zugeordneten Koordinatenursprung (130, 140, 150), Bestimmen eines Werts für jeden der wenigstens drei Einstellparameter in Abhängigkeit von der für diesen Einstellparameter bestimmten Koordinate (x, y, z).

10. Recheneinheit (60) nach Anspruch 9, die dazu eingerichtet ist, alle Verfahrensschritte eines Verfahrens nach einem der Ansprüche 2 bis 8 durchzuführen.

11. Computerprogramm, umfassend Befehle, die bewirken, dass die Recheneinheit des Anspruchs 9 oder 10 die Verfahrensschritte nach einem der Ansprüche 1 bis 8 ausführt.

12. Computerlesbares Medium, auf dem das Computerprogramm nach Anspruch 11 gespeichert ist.

13. System (10; 300) mit

   wenigstens einer Systemkomponente (20, 30, 40; 310) mit elektrisch einstellbaren Komponentenparametern,
   einem Steuergerät (50), das elektrische Signale erzeugt und an die wenigstens eine Systemkomponente (20, 30, 40) übermittelt und damit die elektrisch einstellbaren Komponentenparameter einstellt,
   einer Recheneinheit (60; 320) nach Anspruch 9 oder 10 und
   Mitteln zum Einstellen wenigstens eines der elektrisch einstellbaren Komponentenparameter in Abhängigkeit von den wenigstens drei Einstellparametern.

14. System (10; 300) nach Anspruch 13, wobei die wenigstens eine Systemkomponente (20, 30, 40; 310) mit wenigstens einem elektrisch einstellbaren Komponentenparameter ausgewählt ist aus der Gruppe, die umfasst:

   eine Lichtquelle (20), von der ein Beleuchtungsstrahlengang ausgeht,
   einer optischen Abbildungseinrichtung (30),
   eine Kontrastiervorrichtung,
   eine Filtereinrichtung,
   ein Pinhole,
   eine Strahlumlenkeinrichtung,
   einen Lichtdetektor (40), und
   eine Anzeigeeinheit (70).

**15.** System (10; 300) nach Anspruch 13 oder 14, wobei wenigstens einer der drei Komponentenparameter ausgewählt ist aus der Gruppe, die umfasst: Beleuchtungsintensität, Wellenlänge, zeitliche Frequenz eines Beleuchtungsmusters, räumliche Frequenz eines Beleuchtungsmusters, Durchmesser eines Beleuchtungsstrahls, Dicke einer Lichtscheibe, Vergrößerungsfaktor, Beleuchtungsapertur, Blendenzahl, Einschwenk- oder Einstellparameter von optischen Komponenten im Strahlengang, Helligkeit, Kontrast, Zoom, Scangeschwindigkeit, Azimuth, Verstärkung, Offset, Bittiefe, Belichtungszeit, Samplingrate, Binning, Blendenöffnung eines Pinholes, Anzahl der zu verrechnenden Bilder zu einer HDR-Aufnahme und Anzahl der Bilder, über die ein Mittelwert gebildet wird.

**Claims**

**1.** A computer-implemented method for determining a value for at least three setting parameters by means of an input unit (100) in the form of a graphical user interface with an input pointer (120) positionable in an input surface (110), wherein at least two of the at least three setting parameters can be set independently of one another, comprising:

> determining a position of the input pointer (120) within the input surface (110),
> determining a coordinate (x, y, z) of the position of the input pointer (120) for each of the at least three setting parameters each dependent on a distance of the position of the input pointer (120) from at least one coordinate origin (130, 140, 150), assigned to the respective setting parameter,
> determining a value for each of the at least three setting parameters dependent on the coordinate (x, y, z), determined for this setting parameter.

**2.** The method according to claim 1, wherein each of the at least three setting parameters is assigned a different coordinate origin (130, 140, 150), or wherein each of the at least three setting parameters is assigned at least two coordinate origins (130, 140, 150).

**3.** The method according to any one of the preceding claims, wherein determining a value for each of the at least three setting parameters dependent on the coordinate (x, y, z), determined for this setting parameter, comprises determining a value for each of the at least three setting parameters dependent on the values for the other of the at least three setting parameters.

**4.** The method according to any one of the preceding claims, wherein the input surface (110) is formed as a polygon.

**5.** The method according to claim 4, wherein the polygon is a Reuleaux polygon.

**6.** The method according to claim 4 or 5, wherein at least one or each corner point of the polygon is a coordinate origin (130, 140, 150).

**7.** The method according to claim 6, wherein the input surface (110) is formed as a Reuleaux polygon, the corners of which each define a coordinate origin (130, 140, 150).

**8.** The method according to any one of the preceding claims, comprising determining a value for exactly three setting parameters and/or determining an actuation of at least one trigger surface (111, 112, 113) of the input unit.

**9.** A computing unit (60) with a display unit (70) which is configured for:
representing an input unit (100) in the form of a graphical user interface with an input pointer (120) positionable in an input surface (110) on the display unit (70),

> determining a position of the input pointer (120) within the input surface (110),
> determining a coordinate (x, y, z) of the position of the input pointer (120) for each one of at least three setting parameters each dependent on a distance of the position of the input pointer (120) from at least one coordinate origin (130, 140, 150), assigned to the respective setting parameter,
> determining a value for each of the at least three setting parameters dependent on the coordinate (x, y, z), determined for this setting parameter.

**10.** The computing unit (60) according to claim 9, which is configured to carry out all method steps of a method according to any one of claims 2 to 8.

**11.** A computer program comprising instructions which cause the computing unit of claim 9 or 10 to carry out the method steps according to any one of claims 1 to 8.

**12.** A computer-readable medium on which the computer program according to claim 11 is stored.

**13.** A system (10; 300) with

> at least one system component (20, 30, 40; 310) with electrically-adjustable component parameters,

a control apparatus (50) which generates electrical signals and transmits them to the at least one system component (20, 30, 40) and thereby sets the electrically-adjustable component parameters,

a computing unit (60; 320) according to claim 9 or 10 and

means for adjusting at least one of the electrically-adjustable component parameters dependent on the at least three setting parameters.

14. The system (10; 300) according to claim 13, wherein the at least one system component (20, 30, 40; 310) with at least one electrically-adjustable component parameter is selected from the group, comprising:

a light source (20) from which an illumination beam path emanates,

an optical imaging apparatus (30),

a contrast device,

a filter apparatus,

a pinhole,

a beam deflection apparatus,

a light detector (40), and

a display unit (70).

15. The system (10; 300) according to claim 13 or 14, wherein at least one of the three component parameters is selected from the group comprising: illumination intensity, wavelength, temporal frequency of an illumination pattern, spatial frequency of an illumination pattern, diameter of an illumination beam, thickness of a light disc, magnification factor, illumination aperture, f-number, swivelling or setting parameters of optical components in the beam path, brightness, contrast, zoom, scan speed, azimuth, gain, offset, bit depth, exposure time, sampling rate, binning, aperture opening of a pinhole, number of images to be processed into an HDR recording and number of images over which an average is calculated.

**Revendications**

1. Procédé mis en œuvre par ordinateur pour déterminer une valeur respective pour au moins trois paramètres de réglage au moyen d'une unité de saisie (100) sous la forme d'une interface utilisateur graphique avec un pointeur de saisie (120) apte à être positionné dans une zone de saisie (110), dans lequel au moins deux des au moins trois paramètres de réglage sont aptes à être réglés indépendamment l'un de l'autre, comprenant :

la détermination d'une position du pointeur de saisie (120) à l'intérieur de la zone de saisie (110),

la détermination d'une coordonnée (x, y, z) de la position du pointeur de saisie (120) pour chacun des au moins trois paramètres de réglage en fonction d'une distance respective de la position du pointeur de saisie (120) par rapport au moins une origine de coordonnées (130, 140, 150) associée au paramètre de réglage concerné,

la détermination d'une valeur pour chacun des au moins trois paramètres de réglage en fonction de la coordonnée (x, y, z) déterminée pour ledit paramètre de réglage.

2. Procédé selon la revendication 1, dans lequel une origine de coordonnées (130, 140, 150) différente est associée à chacun des au moins trois paramètres de réglage, ou dans lequel au moins deux origines de coordonnées (130, 140, 150) sont associées à chacun des au moins trois paramètres de réglage.

3. Procédé selon l'une quelconque des revendications précédentes, dans lequel la détermination d'une valeur pour chacun des au moins trois paramètres de réglage en fonction de la coordonnée (x, y, z) déterminée pour ledit paramètre de réglage comprend une détermination d'une valeur pour chacun des au moins trois paramètres de réglage en fonction des valeurs pour les autres des au moins trois paramètres de réglage.

4. Procédé selon l'une quelconque des revendications précédentes, dans lequel la zone de saisie (110) est réalisée sous la forme d'un polygone.

5. Procédé selon la revendication 4, dans lequel le polygone est un polygone de Reuleaux.

6. Procédé selon la revendication 4 ou la revendication 5, dans lequel au moins un sommet, ou chaque sommet, du polygone est une origine de coordonnées (130, 140, 150).

7. Procédé selon la revendication 6, dans lequel la zone de saisie (110) est réalisée sous la forme d'un polygone de Reuleaux dont les coins définissent chacun une origine de coordonnées (130, 140, 150).

8. Procédé selon l'une quelconque des revendications précédentes, comprenant la détermination respectivement d'une valeur pour exactement trois paramètres de réglage et/ou une détermination d'un actionnement d'au moins une surface de déclenchement (111, 112, 113) de l'unité de saisie.

9. Unité de calcul (60) dotée d'une unité d'affichage (70), conçue pour :

afficher une unité de saisie (100) sous la forme d'une interface utilisateur graphique avec un pointeur de saisie (120) apte à être positionné dans une zone de saisie (110) sur l'unité d'affichage (70),

déterminer la position du pointeur de saisie (120) à l'intérieur de la zone de saisie (110),

déterminer une coordonnée (x, y, z) de la position du pointeur de saisie (120) pour chacun d'au moins trois paramètres de réglage en fonction d'une distance respective entre la position du pointeur de saisie (120) et au moins une origine de coordonnées (130, 140, 150) associée au paramètre de réglage concerné,

déterminer une valeur pour chacun des au moins trois paramètres de réglage en fonction de la coordonnée (x, y, z) déterminée pour ledit paramètre de réglage.

10. Unité de calcul (60) selon la revendication 9, qui est mise au point pour mettre en œuvre toutes les étapes de procédé d'un procédé selon l'une quelconque des revendications 2 à 8.

11. Programme informatique comprenant des instructions qui amènent l'unité de calcul selon la revendication 9 ou la revendication 10 à mettre en œuvre les étapes de procédé selon l'une quelconque des revendications 1 à 8.

12. Support lisible par ordinateur, sur lequel un programme informatique selon la revendication 11 est stocké.

13. Système (10 ; 300) avec

au moins un composant de système (20, 30, 40 ; 310) avec des paramètres de composant sont réglables électriquement,

un appareil de commande (50) qui génère des signaux électriques et les transmet audit au moins un composant de système (20, 30, 40) et règle ainsi les paramètres de composant réglables électriquement,

une unité de calcul (60 ; 320) selon la revendication 9 ou la revendication 10, et

des moyens de réglage d'au moins un des paramètres de composants réglables électriquement en fonction des au moins trois paramètres de réglage.

14. Système (10 ; 300) selon la revendication 13, dans lequel l'au moins un composant de système (20, 30, 40 ; 310) avec au moins un paramètre de composant pouvant être réglé électriquement est choisi dans le groupe qui comprend :

une source de lumière (20) d'où provient un chemin de faisceaux d'éclairage,

un système de représentation optique (30),

un dispositif de contraste,

un système de filtrage,

un trou d'épingle,

un système de déviation de faisceau,

un détecteur de lumière (40), et

une unité d'affichage (70).

15. Système (10 ; 300) selon la revendication 13 ou la revendication 14, dans lequel au moins un des trois paramètres de composant est choisi dans le groupe qui comprend : une intensité d'éclairage, une longueur d'onde, une fréquence temporelle d'un modèle d'éclairage, une fréquence spatiale d'un modèle d'éclairage, un diamètre d'un faisceau d'éclairage, une épaisseur d'une glace de diffusion, un facteur de grossissement, une ouverture d'éclairage, un nombre d'ouvertures, des paramètres de pivotement ou de réglage de composants optiques dans le trajet optique, une luminosité, un contraste, un zoom, une vitesse de balayage, un gisement, une amplification, un décalage, une profondeur de bits, un temps d'exposition, une fréquence d'échantillonnage, un binning, une ouverture d'un trou d'épingle, un nombre d'images à calculer pour un enregistrement HDR et un nombre d'images par lesquelles une valeur moyenne est formée.

# Fig. 1

# Fig. 2a

# Fig. 2b

# Fig. 2c

# Fig. 2d

# Fig. 3

# Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063392 A1
- DE 102018132337 A1
- US 2014139541 A1
- EP 2339388 A1
- US 2020050296 A1